# EUROPEAN PATENT APPLICATION

(11) **EP 1 343 235 A1**
(43) Date of publication of application: **10.09.2003**
(21) Application number: 03380042.6
(22) Date of filing: 26.02.2003
(51) Int. Cl.: H02G 3/06

(54) **Joint cover for raceway T-branches for electrical conductors**

(30) Priority: 07.03.2002 ES 200200565 U
(71) Applicant: Aparellaje Electrico S.L., 08903-L'Hospitalet De Llobregat (Barcelona) (ES)
(72) Inventor: Benito Navazo, Juan Manuel, 08290 Sant Cugat Del Valles (Barcelona) (ES)
(74) Representative: Curell Aguilà, Marcelino

(57) **Abstract**

The invention relates to a joint cover (1) for raceway "T" branches for electrical conductors of the type made up of a base section and a closing cover section the side walls of which are coplanar to the side walls of the base section, with means for lateral attachment made up of a short and wide area (4B) of a central flat portion (4) and two parallel rectangular faces (6B) of straight dihedral lateral portions (5), which comprise feet (7) suitable for being retained between the bottom wall of the base section and the fixture in which it is applied, transversal ribs (10) intended to coincide with the engagement groove of the cover section in the base section, two inner tabs (11) which form an engagement stop, and recesses (12) for disassembly by inserting the end of a screwdriver.

## Description

### Field of the invention

This invention refers to a joint cover for raceway T-branches in electrical conductors, particularly applicable to the raceways of the type made up of a base section having side walls and a cover section having side walls, where the cover section has the side walls thereof coplanar to the side walls of the base section.

### State of the art

Joint covers are known which are applicable to said type of raceways which are made up of a part for laterally adapting to a main raceway for electrical conductors, with which it frames a hole made therein, and a frontal engagement part, in which there is engaged the end of another raceway located at 90° to the former, which holds electrical conductors branched from those in the former, or vice versa, and which, being made up of one integral part, is provided with means for laterally adapting to one of the raceways and means for frontal engagement to the other of the raceways, with said integral part being made up of a rectangular arch formed by a central flat portion, intended to adapt simultaneously to a part of the cover section of the coinciding raceways, and two straight dihedral lateral portions with rectangular faces, intended to adapt, each of them simultaneously, to the sides of the raceways in the dihedral meeting angles, which encompass the portions of the base and cover section walls which meet in said dihedral angles.

These all suffer from the drawback that the joint cover, once mounted in the T-branch is only retained by mere friction, whereby, owing to changes in room temperature, local vibrations, cleaning operations and other causes, the separation, and even removal, of the joint cover occurs, which leads to breaks in the continuity of the insulating wall, the formation of cracks allowing dust and humidity to enter, and the possible ingress of insects which may make their nest in the raceways, etc.

### Summary of the invention

In order to overcome this drawback and avoid the consequences thereof, the solution has been adopted whereby the joint cover is secured by the raceway proper, particularly by the fixed part thereof, that is, the base section.

In accordance with the foregoing solution a joint cover has been developed in which the means for lateral attachment, as well as comprising a large and narrow part of the central portion and two mutually coplanar rectangular faces on the straight dihedral lateral portions, include at least one foot which, projecting from said rectangular faces parallel to the central portion, is suitable for being placed and retained between the base section bottom wall and the fixture to which said base section is applied.

Preferably, the frontal engagement means are made up of a short and wide area of the central flat portion and the other two rectangular parallel faces of the straight dihedral lateral portions.

Advantageously, at least one of the rectangular faces of the straight dihedral lateral portions is provided on the inside with transversal ribs coinciding with the engagement groove of the cover section in the base section.

More advantageously, another feature envisaged in the invention lies in the fact that the central flat portion is provided with at least one inner tab that forms an engagement stop for the branched raceway.

Preferably, said joint cover according to the invention comprises, on one point of the outer edge of its coplanar rectangular faces, an indent which enables the flat end of a screwdriver to be inserted.

### Brief description of the drawings

In order to facilitate the understanding of the foregoing ideas, a preferred embodiment of the invention is described below, with reference to the accompanying illustrative drawings, in which:
Figure 1, shows a joint cover, which includes the object of the invention viewed in perspective according to the means thereof for frontal engagement to the branched raceway.
Figure 2, shows the same joint cover as in the preceding figure, placed on a flat surface on its engagement face and viewed in perspective according to the means for laterally adapting to the main raceway.

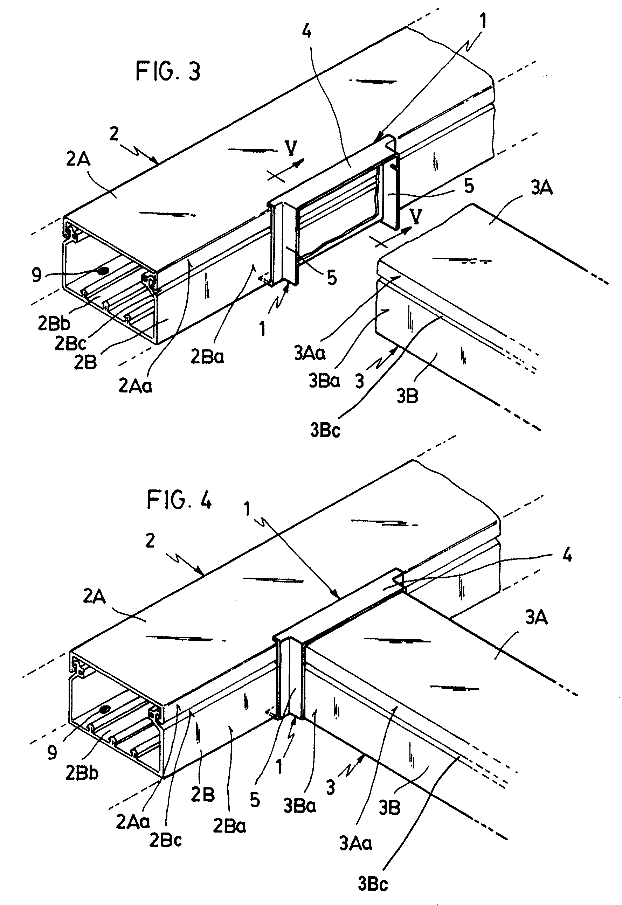

Figure 3, shows, in perspective, a part of the main raceway in which a lateral hole has been made to perform a T-branch and there has been adapted thereto a joint cover according to the invention which is suitable for engaging through insertion a branched raceway, shown in the waiting position.
Figure 4, shows, in perspective, the ensemble of the preceding figure once branched.
Figure 5, shows a section along line V-V of Figure 3, in which it can be seen how the joint cover is retained once the main raceway is secured to the fixture.

### Detailed description of an embodiment of the invention

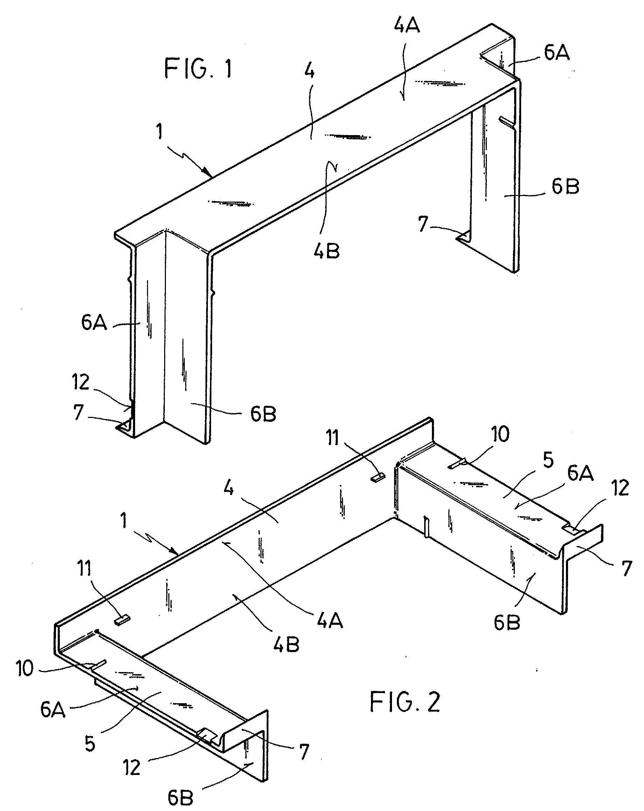

As shown in Figures 1 and 2, the joint cover is made up of an integral part 1 in which there can be distinguished means for laterally adapting to a main raceway 2 and means for frontal adapting to a branched raceway 3.

Said integral part 1 is made up, on the one hand, of a rectangular arch formed by a central flat portion 4, intended to adapt simultaneously to a part of each of the cover sections 2A and 3A, respectively, of main raceway 2 and branched raceway 3, by means of its areas 4A and 4B, also respectively, while, on the other hand, it is made up of two lateral portions 5 of a straight dihedral shape with rectangular faces that are coplanar 6A, and parallel 6B, each of which portions is connected at one end to the ends of central flat portion 4 and are intended to adapt, each of them simultaneously, to the sides of main raceway 2 and branched raceway 3 in the dihedral meeting angles, which encompass the portions of the walls 2Ba, 2Aa, 3Ba and 3Aa of the base sections 2B and 3B and cover sections 2A and 3A which meet in said dihedral angles.

According to the invention, the means of the joint cover integral part 1 for laterally adapting to main raceway 2, as well as comprising the long and narrow area 4A and the two mutually coplanar rectangular faces 6A of the straight dihedral lateral portions 5, include respective feet 7 which, projecting from said rectangular faces 6A parallel to central flat portion 4, are suitable for being placed and retained between the bottom wall 2Bb of base section 2B of main raceway 2 and the fixture 8 in which main raceway 2 is mounted by means of the attachment screws 9.

The frontal engagement means for branched raceway 3 are made up of the short and wide part or area 4B of central flat portion 4 and the other two rectangular parallel faces 6B of straight dihedral lateral portions 5.

Coplanar 6A and parallel 6B rectangular faces of straight dihedral lateral portions 5 are provided on the inside with transversal ribs 10 coinciding spatially with the grooves 2Bc and 3Bc on base sections 2B and 3B of main raceway 2 intended for engaging cover section 2A and of branched raceway 3 for engaging cover section 3A.

Central flat portion 4 is provided with two inner tabs 11 which form an engagement stop for branched raceway 3.

On the other hand, integral part 1 is provided on one point of the outer edge of its coplanar 6A rectangular faces, with a recess 12 or chiselled notch which enables the flat end of a screwdriver to be inserted to remove integral part 1 from its engagement to main raceway 2 without the need to act upon screws 9 that attach same to fixture 8.

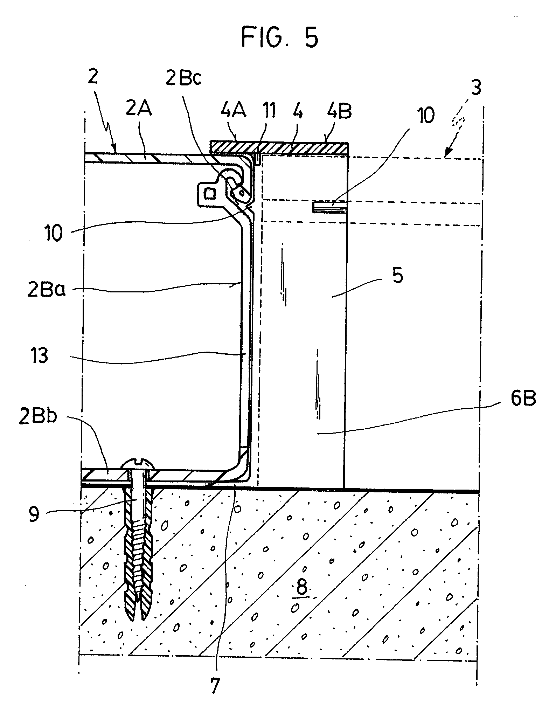

Integral part 1, as shown in Figures 1 and 5, frames a hole 13 made in wall 2Ba of base section 2B of main raceway 2.

## Claims

1. Joint cover for raceway T-branches for electrical conductors, particularly applicable in installations consisting of raceways of the type made up of a base section (2B, 3B) having side walls and a closing cover section (2A, 3A) having side walls, where said closing cover section (2A, 3A) has its side walls coplanar to the side walls of said base section (2B, 3B), said joint cover comprising a part for laterally adapting to a main raceway (2), with which it frames a hole (13) made in said main raceway (2), and a part for frontal engagement, in which there is engaged the end of another branched raceway (3) located at 90° to the former, and which, being made up of one integral part (1), is provided with means for laterally adapting to one of the raceways and means for frontal engagement with the other of the raceways, with said joint cover being made up of a rectangular arch formed by a central flat portion (4), intended to adapt simultaneously to a part of cover section (3A) of branched raceway (3), and two straight dihedral lateral portions (5) with rectangular faces, intended to adapt, each of them simultaneously, to the sides of raceways (2, 3) in the dihedral meeting angles, which encompass the portions of the base (2B, 3B) and cover (2A,3A) section walls which meet in said dihedral angles, **characterised in that** the means for lateral adaptation, as well as comprising a long and narrow part (4A) of central flat portion (4) and two rectangular faces (6A) which are mutually coplanar on straight dihedral lateral portions (5), include at least one foot (7) which, projecting from said rectangular faces (6A) parallel to central flat portion (4), is suitable for being placed and retained between the bottom wall (2Bb) of base section (2B) and fixture (8) to which said base section (2B) is applied.

2. Joint cover, according to the preceding claim, **characterised in that** the frontal engagement means are made up of a short and wide part (4B) of central flat portion (4) and the other two rectangular parallel faces (6B) of straight dihedral lateral portions (5).

3. Joint cover, according to claims 1 or 2, **characterised in that** at least one of rectangular faces (6A, 6B) of straight dihedral lateral portions (5) is provided inside with transversal ribs (10) coinciding with the engagement groove (2Bc, 3Bc) of cover section (3A) in base section (3B).

4. Joint cover, according to any of claims 1 to 3, , **characterised in that** central flat portion (4) is provided with at least one inner tab (11) which forms an engagement stop for branched raceway (3).

5. Joint cover according to any of claims 1 to 4, **characterised in that** it includes on one point of the outer edge of its coplanar rectangular faces (6A) a recess (12) which enables the flat end of a screwdriver to be inserted.
